# EUROPÄISCHE PATENTANMELDUNG

(11) **EP 2 708 335 A1**
(43) Veröffentlichungstag der Anmeldung: **19.03.2014**
(21) Anmeldenummer: 12184366.8
(22) Anmeldetag: 14.09.2012
(51) Int. Cl.: B25J 15/04, B25J 15/06

(54) **Hochgeschwindigkeits-Greiferwechselsystem**

(71) Anmelder: Knapp AG, 8075 Hart bei Graz (AT)
(72) Erfinder: Mathi, Franz, 8200 Gleisdorf (AT); Hoffmann, Forian, 8141 Unterpremstätten (AT)
(74) Vertreter: Röggla, Harald

(57) **Zusammenfassung**

Die Erfindung betrifft ein Greiferwechselsystem (10) für einen Roboter mit einem Greifsystem (7), an dem ein Grundkörper (9) des Greiferwechselsystems (10) vorgesehen ist, an den zumindest zwei unterschiedliche Greiferaufsätze (11) zum Greifen von Greifgut (P) ankoppelbar sind, wobei der Grundkörper (9) und/oder jeder Greiferaufsatz (11) des Greiferwechselsystems (10) einen Magneten (20, 21) und insbesondere einen Permanentmagneten aufweisen, mit dessen Magnetkraft der jeweilige Greiferaufsatz (11) zum Greifen von Greifgut (P) an den Grundkörper (9) ankoppelbar ist.

## Beschreibung

Die Erfindung betrifft ein Greiferwechselsystem für einen Roboter mit einem Greifsystem, an dem ein Grundkörper des Greiferwechselsystems vorgesehen ist, an den zumindest zwei unterschiedliche Greiferaufsätze zum Greifen von Greifgut ankoppelbar sind.

Handhabungssysteme wie beispielsweise Linearachsen oder Roboter werden immer häufiger in der Logistik bzw. Intralogistik eingesetzt. Dabei ist die Handhabungsaufgabe derart spezifiziert, dass Packstücke in einem nicht vorbekannten Ordnungsgrad dem Roboter zugeführt werden. Darüber hinaus sind die Packstücke bzw. das Greifgut häufig in oder auf sogenannten Ladungsträgern gespeichert. Diese reichen von Gitterboxen, Rollcontainern oder Paletten bis hin zu Kleinteileboxen.

Je nach Packstückgröße werden entsprechende Ladungsträger ausgewählt. Damit ergeben sich mehr oder weniger dicht gepackte Ladungsträger aus denen die Handhabungstechnik ein oder mehrere Packstücke entnehmen soll. In der Regel werden aus unterschiedlichen Ladungsträgern Packstücke entnommen und diese dann zu einer Kommission für den Kunden zusammen gestellt. Dabei ist je nach Logistikstufe eine Vorkommissionierung oder die endgültige Fertigstellung der Kommission möglich. Beispielsweise gibt es in der Pharmalogistik eine Zwischenstufe, welche die Zusammenstellung der Kommissionen für die Apotheken darstellt. Das heißt, hier wird nicht direkt für den Endverbraucher kommissioniert, sondern eine Kommission ist aus mehreren zum Teil doppelten Packstücken zusammen gesetzt.

Das Handhabungssystem hat die Aufgabe die Packstücke entweder im Stillstand des Ladungsträgers oder bei bewegtem Ladungsträger abzugreifen und anschließend einer bestimmen Kommission zuzuführen. Beim Ablegen der Packstücke bestehen unterschiedliche Anforderungen. Beispielsweise kann es sein, dass die Packstücke geordnet abgelegt werden sollen. Ebenso können die Packstücke auch einfach nur abgeworfen werden.

Für die Greiftechnik ergeben sich besonders beim sogenannten "Griff in die Kiste" besondere Anforderungen hinsichtlich des Bauraums des Greifers und der Störkontur. Ferner muss der Greifer trotz der variierenden Produktgrößen, Gewichte und Abstände alle Produkte sicher handhaben können. Da es nicht möglich ist mit einem kleinen und störkonturoptimierten Greifer, der für kleine, leichte und eng beieinander liegende Produkte geeignet ist, große und schwere Produkte sicher zu handhaben, ist in solch einem Fall ein Greiferwechsel sinnvoll.

Da von modernen Automatisierungslösungen eine möglichst große Flexibilität erwartet wird, kommen Greiferwechselsysteme in steigender Zahl zum Einsatz. Um die geforderten Handhabungsaufgaben oder Flexibilität zu gewährleisten, werden in solchen Fällen entweder die Greifer oder Teile des Greifers mit einem Wechselsystem versehen, das einen manuellen oder automatischen Tausch des Greifers im laufenden Betrieb ermöglicht.

Der Fachmann versteht unter einem Greiferwechselsystem eine Vorrichtung zum automatischen Wechsel des Greifaufsatzes an Industrierobotern und automatischen Handhabungssystemen. Die Wechselaufsätze sind innerhalb des Roboterarbeitsraums auf einer Halterung (Greiferwechselsystem) angebracht. Über die Robotersteuerung wird der automatische Wechsel des Greifaufsatzes angestoßen. Der Wechsel kann vor, nach oder zwischen einem Abgriff erfolgen. In einem automatischen Handhabungsprozess werden in Abhängigkeit der unterschiedlichen Objekteigenschaften (in Form, Abmessung, Gewicht, etc.) entsprechende Greifaufsätze benötigt. Die Aufnahme und Abgabe des Greifaufsatzes kann ebenfalls auf Basis der drei Greifprinzipien Kraft-, Formschluss und der Kombination beider erfolgen.

Bekannte Greiferwechselsysteme sind komplexe Systeme, die einen manuellen oder automatischen Greiferwechsel ermöglichen. Solche Systeme sind meist zweiteilig ausgeführt. Hierbei bleibt ein festes Element bzw. ein Grundkörper stets am Roboter, während an jedem Greiferaufsatz ein separates Gegenstück montiert ist. In der Regel besitzen diese Greiferwechselsysteme integrierte Kupplungen für Druckluft, Vakuum oder elektrische Signale, damit Funktionen der unterschiedlichen Greiferaufsätze angesteuert werden können.

Nachteilig bei herkömmlichen Greiferwechselsystemen ist, dass diese konstruktionsbedingt schwer, groß und langsam sind. Dies liegt daran, dass diese Greiferwechselsysteme für hohe Genauigkeiten und hohe Traglasten ausgelegt sind. Meistens besteht jede Hälfte des Greiferwechselsystems aus einem massiven Grundkörper aus Aluminium. In diesen ist eine integrierte Mechanik für die Verriegelung eingebaut. Aufgrund der Komplexität sind solche Greiferwechselsysteme vergleichsweise teuer. Für jede Greifervariante wird ein eigenes Kupplungsstück benötigt.

Aufgrund der großen Masse, der begrenzten Wechselgeschwindigkeit und der Größe eignen sich diese Greiferwechselsysteme nicht für hochdynamische Anwendungen, bei denen zusätzlich kurze Wechselintervalle und minimale Wartezeiten extrem wichtig sind. Ferner kommen solche Greiferwechselsysteme vor allem in Hochgeschwindigkeitsanwendungen praktisch nicht zum Einsatz, da die Traglasten der Roboter knapp bemessen sind und die Taktzeiten stark von der bewegten Masse abhängt.

Bei den bekannten Greiferwechselsystemen muss bei einem Greiferwechsel der aktuell am Roboter montierte Greiferaufsatz zuerst in eine definierte Ablegeposition gebracht werden. Anschließend wird die Verriegelung gelöst. Dieses Abdocken wird zur Sicherheit mit stark reduzierter Geschwindigkeit durchgeführt, um ein Verkanten oder ungewolltes Hängenbleiben des Greiferaufsatzes zu vermeiden. Nachdem der Roboter zum neuen Greiferaufsatz gefahren ist, wird dieser mit extrem reduzierter Geschwindigkeit an diesen heranfahren, damit die sensiblen Zentrierelemente und Kontaktelemente nicht beschädigt werden und eventuelle Fluchtungsfehler von den Einlaufschrägen ausgeglichen werden können. Der Verriegelungsmechanismus wird betätigt, sobald die beiden Systemhälften des Greiferwechselsystems nahezu komplett ineinander gefahren sind. Anschließend kann der Greiferaufsatz aus der Ablageposition herausgehoben werden und zum Einsatz kommen.

Diese bekannten Greiferwechselsysteme besitzen folgende entscheidende Schwächen:
- Hohe Masse aufgrund massiver Bauweise, komplexe Geometrien, komplizierte Mechanik
- Lange Wechselzeit wegen hoher geforderter Genauigkeit, Beschädigungsgefahr, Verriegelungsprozess
- Kosten
- Große Störkontur
- Insgesamt ungeeignet für Hochgeschwindigkeitsanwendungen

Die Erfindung hat sich zur Aufgabe gestellt ein Greiferwechselsystem zu schaffen, das die vorstehenden Nachteile vermeidet und insbesondere für den Einsatz in Hochgeschwindigkeitsanwendungen geeignet ist. Erfindungsgemäß wird diese Aufgabenstellung dadurch gelöst, dass der Grundkörper und/oder jeder Greiferaufsatz des Greiferwechselsystems einen Magneten und insbesondere einen Permanentmagneten aufweisen, mit dessen Magnetkraft der jeweilige Greiferaufsatz zum Greifen von Greifgut an den Grundkörper ankoppelbar ist.

Hierdurch ist der Vorteil erhalten, dass das Greifsystem mit dem Grundkörper nur in die Nähe des zum Ankoppeln vorgesehenen Greiferaufsatzes fahren muss, bis die Magnetkraft ausreichend groß ist, um den Greiferaufsatz "fliegend" an den Grundkörper anzukoppeln. Das Greifsystem kann hierbei mit voller Geschwindigkeit bzw. mit nur geringfügig verringerter Geschwindigkeit an den anzukoppelnden Greiferaufsatz heranfahren. Um ein zuverlässiges Ankoppeln zu gewährleisten halten Haltemittel der Wechselstation den zum Ankoppeln ausgewählten Greiferaufsatz so lange fest, bis der Grundkörper ausreichend nahe herangefahren ist. Hierdurch wird auch verhindert, dass nicht zum Ankoppeln ausgewählte Greiferaufsätze durch die Magnetkraft des Magneten des Grundkörpers nicht unbeabsichtigt aus der Wechselstation gehoben werden.

Weitere vorteilhafte Ausgestaltungen des erfindungsgemäßen Greiferwechselsystems werden im Folgenden anhand der Figuren näher erläutert.
Figur 1 zeigt zwei Beispiele von Ladungsträgern mit Packstücken.
Figur 2 zeigt ein Beispiel eines Greisystems ohne Greiferwechselsystem.
Figur 3 zeigt eine erfindungsgemäßes Greifsystem mit Greiferwechselsystem.
Figur 4 zeigt eine Wechselstation des Greiferwechselsystems.
Figur 5 zeigt den Grundkörper des Greiferwechselsystems.
Figur 6 zeigt einen Kopplungsteil des Greiferaufsatzes des Greiferwechselsystems.
Figur 7 zeigt einen Teil des Greifsystems mit Grundkörper und angekoppeltem Greiferaufsatz in einer Schnittdarstellung.

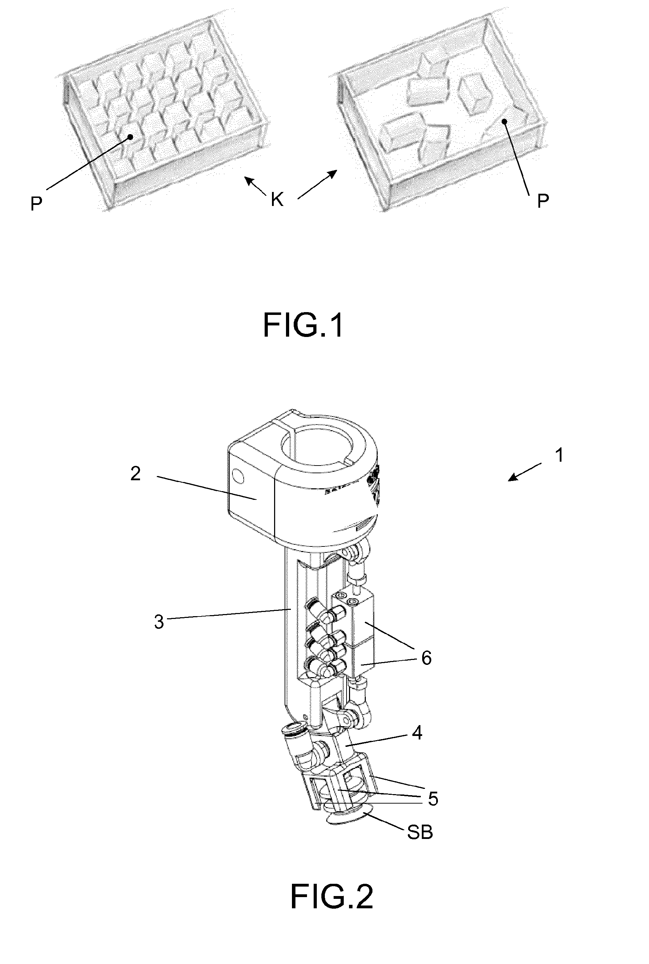

Figur 1 zeigt zwei Kisten K, die Ladungsträger bilden und in denen entweder sortiert und an einem fixen Platz (Figur 1 links) oder in beliebiger Schüttung (Figur 1 rechts) Greifgut bzw. Packstücke P enthalten sind. Aus dem Stand der Technik sind automatisierte Kommissioniersysteme bekannt, die Ladungsträger mit zu kommissionierenden Packstücken P mittels Fördertechnik aus einem Lager transportieren und mittels Roboter samt Greifer die gewünschte Anzahl an Packstücken P aus dem Ladungsträger in eine Kommissionierkiste legen.

Figur 2 zeigt ein Greifsystem 1 eines solchen Kommissioniersystems, wobei das Greifsystem 1 an einer Haltevorrichtung 2 mit einer Kinematik des Roboters verbunden ist, die das Greifsystem 1 an die jeweils nötige Position zum Kommissionieren der Packstücke P positioniert. Das Greifsystem 1 weist einen Längsarm 3 und einen Knickarm 4 auf, an dem ein Saugbalg SB mit Abstützungen 5 vorgesehen ist. Das Greifsystem 1 wird pneumatisch betrieben, wofür in Figur 2 nicht dargestellte Druckleitungen an Druckzylindern 6 angeschlossen sind. Zum Greifen bzw. Ansaugen eines Packstücks P steuert eine Steuerung des Greifsystems 1 die in Figur 2 nicht dargestellte Kinematik an die richtige Position und knickt den Knickarm 4 entsprechend der Lage des Packstücks P ab, wodurch der Saugbalg SB an einer Fläche des Packstücks P zu liegen kommt. Anschließend wird der Saugbalg SB mit Unterdruck beaufschlagt und saugt das Packstück P gegen die Abstützungen 5. Nachdem die Kinematik mit dem Greifsystem 1 und das angesaugte Packstück P zu der Kommissionierkiste transportiert hat wird der Unterdruck aus dem Saugbalg SB abgelassen und das Packstück P fällt in die Kommissionierkiste oder wird geordnet in die Kommissionierkiste gelegt.

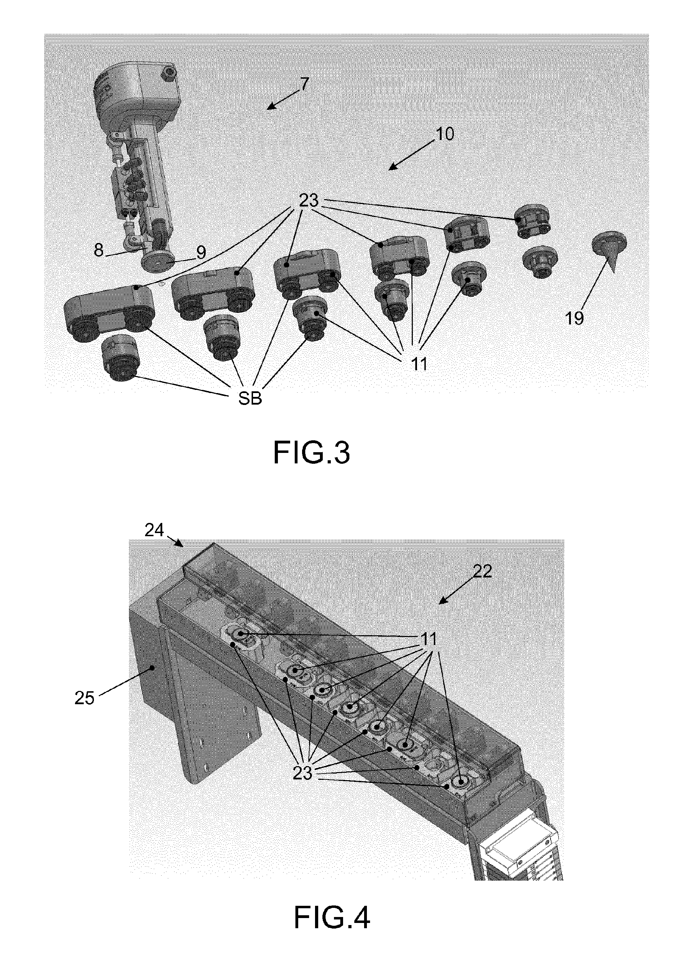

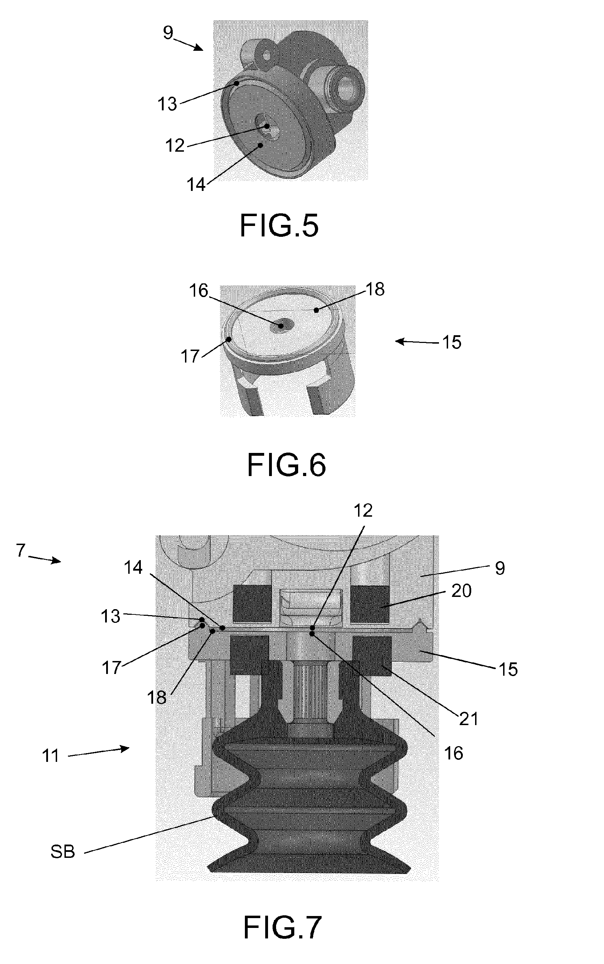

Figur 3 zeigt eine erfindungsgemäßes Greifsystem 7, an dessen Knickarm 8 ein Grundkörper 9 eines Greiferwechselsystems 10 vorgesehen ist, wobei an den Grundkörper 9 mehrere unterschiedliche Greiferaufsätze 11 zum Greifen von Greifgut bzw. Packstücken P ankoppelbar sind. Der Grundkörper 9 ist in Figur 5 näher dargestellt, wobei eine Ansaugöffnung 12 und eine die Ansaugöffnung 12 umgebende Dichtfläche dargestellt ist, die in Form einer schräge Flächen aufweisenden Ringnut 13 ausgeführt ist. Der Grundkörper 9 weist weiters zwischen Ansaugöffnung 12 und Dichtfläche eine Haltefläche 14 auf, worauf nachfolgend näher eingegangen ist.

Die Greiferaufsätze 11 weisen alle einen einheitlichen Kopplungsteil 15 auf, der in Figur 6 näher dargestellt ist. Der Kopplungsteil 15 ist zum Ankoppeln an den Grundkörper 9 vorgesehen und weist hierfür eine Ansaugöffnung 16, eine als Dichtungsring 17 ausgeführte Dichtfläche mit schrägen Flächen und eine Haltefläche 18 auf. Im angekoppelten Zustand liegt der Dichtungsring 17 in der Ringnut 13 und dichtet einen von der Pneumatik des Geifsystems 7 in der Ansaugöffnung 12 erzeugten Unterdruck gegenüber dem Umgebungsdruck des Greiferwechselsystems 10 ab, wie dies in Figur 7 in einer Schnittdarstellung dargestellt ist. Durch die schrägen Flächen des Dichtungsrings 17 und der Ringnut 13 ist im angekoppelten Zustand eine formschlüssige Verbindung zwischen dem Grundkörper 9 und den Greiferaufsätzen 11 gegeben, die den Vorteil hat, dass die Greiferaufsätze 11 in dem Grundkörper 9 zentriert werden und die Ansaugöffnungen 12 und 16 übereinander zu liegen kommen. Hierdurch ist eine bessere Luftströmung beim Aufbau des Unterdrucks durch die Ansaugöffnungen 12 und 16 gegeben und die Zentrierung stellt weiters sicher, dass der Roboter die exakte Position des Saugbalgs SB zum sicheren Greifen des Packstücks P kennt.

In den Kopplungsteilen 15 der unterschiedlichen Greiferaufsätze 11 sind unterschiedlich ausgeführte Saugbälge SB oder auch eine Ansaugspitze 19 vorgesehen, um je nach Packstückgröße, Packstückgewicht oder anderen Kriterien den zum Greifen geeigneten Greiferaufsatz 11 an das Greifsystem 7 anzukoppeln. Hierdurch ermöglicht das Greiferwechselsystem 10 eine besondere Flexibilität bezüglich der zu greifenden Packstücke P.

Der Grundkörper 9 weist nunmehr einen Magnet 20 und die Greiferaufsätze 11 weisen je einen Magneten 21 auf. Die Magnete 20 und 21 sind als Permanentmagnete ausgeführt und mit umgekehrter N/S-Polung angeordnet, weshalb die Magnetkraft der Magnete 20 und 21 den Greiferaufsatz 11 an den Grundkörper 9 zieht bzw. ankoppelt. Hierdurch ist der Vorteil erhalten, dass weder in dem Grundkörper 9 noch in dem Greiferaufsatz 11 eine Verriegelungsmechanik vorgesehen sein muss, um den Greiferaufsatz 11 an dem Grundkörper 9 zu verriegeln. Hierdurch ist ein konstruktiv einfaches, kostengünstiges und insbesondere leichtes Greifsystem 7 mit Greiferaufsätzen 11 realisiert. Das geringe Gewicht ermöglicht wesentlich schnellere und energieeffizientere Bewegungen der Kinematik und des Greifsystems 7.

Bei dem Greiferwechselsystem 10 ist nunmehr der Dichtungsring 17 so ausgebildet, dass die Halteflächen 14 und 18 im angekoppelten Zustand einander nicht berühren, weshalb sich zwischen den Halteflächen 14 und 18 ebenfalls der Unterdruck ausbildet. Dieser Unterdruck zwischen den Halteflächen 14 und 18 bewirkt durch den höheren Umgebungsdruck, dass der Greiferaufsatz 11 zusätzlich zur Magnetkraft auch durch die Druckkraft bzw. Ankopplungskraft an den Grundkörper 9 angekoppelt wird. Hierdurch ist eine besonders sichere Ankopplung des Greiferaufsatzes 11 gerade zu jenen Zeiten gegeben, zu denen das Greifsystem 7 ein gegebenenfalls schweres Packstück P transportiert.

In Figur 4 ist die Wechselstation 22 des Greiferwechselsystems 10 dargestellt, wobei Greiferaufnahmen 23 zu sehen sind, in denen teilweise Greiferaufsätze 11 abgelegt sind. Jeder Greiferaufnahme 23 ist ein Pneumatikzylinder als Haltemittel 24 zugeordnet, der einen Verriegelungsstift zum Verriegeln des Greiferaufsatzes 11 in der Wechselstation 22 betätigt. In einem Kasten 25 sind die Drucklufterzeugung und eine Steuerung der Wechselstation 22 vorgesehen.

Wenn ein an das Greifsystem 7 angekoppelter Greiferaufsatz 11 in die Wechselstation 22 abgelegt werden soll, dann legt das Greifsystem 7 mit unverändert hoher oder gegebenenfalls geringfügig verringerter Geschwindigkeit den Greiferaufsatz 11 in die dafür vorgesehene leere Greiferaufnahme 23. Diese hohe Geschwindigkeit ist deshalb möglich, da im Fall eines technischen Defekts, wenn das Greifsystem 7 beispielsweise durch eine ungenaue Steuerung bezüglich der Ablegeposition mit einem Teil der Wechselstation 22 kollidiert, der Greiferaufsatz 11 einfach vom Greifsystem 7 abgestreift werden würde, wofür nur die Magnetkraft überwunden werden muss. Die magnetische Verbindung des Greiferaufsatzes 11 mit dem Grundkörper 9 bildet hierbei eine Sollbruchstelle, weshalb beim Abstreifen keine Beschädigungen auftreten, wohingegen bei einem Greiferwechselsystem gemäß dem Stand der Technik mit einer mechanischen Verriegelung zwischen Greifsystem und Greiferaufsatz bei Auftreten des vorstehend beschriebenen technischen Defekts erheblicher Schaden erleiden würde.

Sobald das Greifsystem 7 den abzukoppelnden Greiferaufsatz 11 in die leere Greiferaufnahme 23 positioniert hat aktiviert die Steuerung der Wechselstation 22 die Haltemittel 24 dieser Greiferaufnahme 23 und fixiert den Greiferaufsatz 11 mechanisch in der Greiferaufnahme 23. Hierauf steuert die Steuerung des Roboters das Greifsystem 7 von der Wechselstation 22 weg, wodurch die Magnetkraft der Magneten 20 und 21 überwunden und der Greiferaufsatz 11 vom Greifsystem 7 abgekoppelt wird. Ein leichtes Verkippen des Greifsystems 7 beim Wegbewegen des Greifsystems 7 von der Wechselstation 22 erleichtert hierbei das Abkoppeln. Hierdurch ist eine konstruktiv besonders einfache und zuverlässige Art der Abkopplung der Greiferaufsätze 11 vom Greifsystem 7 erhalten.

Wenn der Roboter zum Kommissionieren eines Packstücks P einen Greiferaufsatz 11 an dem leeren Grundkörper 9 des Greifsystems 7 ankoppeln möchte, dann bewegt der Roboter das Greifsystem 7 mit dem Grundkörper 9 in die Nähe der Greiferaufnahme 23, in der der anzukoppelnde Greiferaufsatz 11 liegt. Diese Bewegung erfolgt mit vom Kommissionieren unvermindert hoher oder gegebenenfalls geringfügig verringerter Geschwindigkeit. Sobald der Grundkörper 9 so nahe an dem anzukoppelnden Greiferaufsatz 11 ist, dass die Magnetkraft der Magnete 20 und 21 groß genug ist, um ein zuverlässiges Ankoppeln zu gewährleisten, steuert die Steuerung die Haltemittel 24 an, um den Greiferaufsatz 11 freizugeben. Durch die Magnetkraft wird der Greiferaufsatz 11 aus der Greiferaufnahme 23 gehoben und einige Millimeter oder Zentimeter über der Greiferaufnahme 23 an den Grundkörper 9 angekoppelt. Durch diese "fliegende" Ankopplung ist ein Abbremsen des Greifsystems 7 auf eine niedrige Geschwindigkeit nicht nötig, weshalb das Greiferwechselsystem 10 für Hochgeschwindigkeitsanwendungen besonders geeignet ist. Die Zentrierung durch den Dichtungsring 17 stellt sicher, dass der Greiferaufsatz 11 an der richtigen Position angekoppelt wird.

Es kann erwähnt werden, dass auch nur der Grundkörper einen Magneten aufweisen könnte, der eine anziehende Magnetkraft auf ein Metall im Greiferaufsatz ausüben würde. Dieser Magnet könnte auch als Elektromagnet ausgeführt werden, der zum Abkoppeln stromlos geschaltet werden würde, um das Abkoppeln zu erleichtern. Gemäß einem anderen Ausführungsbeispiel könnte auch nur in den Greiferaufsätzen 11 jeweils ein Magnet vorgesehen sein, der auf ein Metall im Grundkörper eine anziehende Magnetkraft ausüben würde.

Es hat sich als vorteilhaft erwiesen den Saugbalg SB in dem Grundkörper als Greifeinheit vorzusehen. Erfindungsgemäße Greiferaufsätze könnten aber auch andere Greifeinheiten aufweisen, die beispielsweise einen Elektromagneten zum Greifen metallischer Packstücke aufweisen könnte. Ebenso könnte die Greifeinheit als Zangen-, Scherengreifer oder Fingergreifer in dem Grundkörper vorgesehen sein, die von der Robotersteuerung gesteuert das jeweilige Packstück umgreifen.

Bei dem vorstehend beschriebenen Ausführungsbeispiel wird die Magnetkraft und die Ankopplungskraft durch den Unterdruck zwischen den Halteflächen 14 und 18 zum zuverlässigen Halten des angekoppelten Greiferaufsatzes 11 genutzt. Gemäß einem anderen Ausführungsbeispiel könnte auch nur die Magnetkraft den Greiferaufsatz an den Grundkörper ankoppeln, wenn beispielsweise nur leichte Packstücke kommissioniert werden sollen. Gemäß einem weiteren Ausführungsbeispiel könnte auch eine andere zur Magnetkraft zusätzlich Ankopplungskraft genutzt werden, wobei diese auch durch eine mechanische Verriegelung realisiert werden könnte, wenn mit bestimmten Greiferaufsätzen besonders schwere Packstücke besonders schnell mit dem Roboter transportiert werden müssen.

Gemäß einem weiteren Ausführungsbeispiel der Erfindung könnte in dem Greiferwechselsystem ein Sensor vorgesehen sein, um den angekoppelten Greiferaufsatz zu identifizieren. So könnte beispielsweise in jedem Greiferaufsatz ein RFID-Tag mit einer eindeutigen Seriennummer vorgesehen sein, der von einem RFID-Reader im Grundkörper oder im Roboterarm ausgelesen werden würde, um den Greiferaufsatz eindeutig zu identifizieren. Weiters könnte in dem Grundkörper ein Helligkeitssensor vorgesehen sein, um zu detektieren, ob der angekoppelte Greiferaufsatz richtig positioniert ist und nicht schief auf dem Grundkörper sitzt.

## Patentansprüche

1. Greiferwechselsystem (10) für einen Roboter mit einem Greifsystem (7), an dem ein Grundkörper (9) des Greiferwechselsystems (10) vorgesehen ist, an den zumindest zwei unterschiedliche Greiferaufsätze (11) zum Greifen von Greifgut (P) ankoppelbar sind, **dadurch gekennzeichnet, dass** der Grundkörper (9) und/oder jeder Greiferaufsatz (11) des Greiferwechselsystems (10) einen Magneten (20, 21) und insbesondere einen Permanentmagneten aufweisen, mit dessen Magnetkraft der jeweilige Greiferaufsatz (11) zum Greifen von Greifgut (P) an den Grundkörper (9) ankoppelbar ist.

2. Greiferwechselsystem (10) gemäß Anspruch 1, **dadurch gekennzeichnet, dass** der Grundkörper (9) eine Ansaugöffnung (12) und eine die Ansaugöffnung (12) umgebende Dichtfläche (13) aufweist und, dass jeder Greiferaufsatz (11) eine Ansaugöffnung (16) und eine die Ansaugöffnung (16) umgebende Dichtfläche (17) aufweist, wobei die beiden Dichtflächen (13, 17) im angekoppelten Zustand zum Abdichten eines in den Ansaugöffnungen (12, 16) bestehenden Unterdrucks gegenüber dem Umgebungsdruck des Greiferwechselsystems (10) ausgebildet sind.

3. Greiferwechselsystem (10) gemäß Anspruch 2, **dadurch gekennzeichnet, dass** zumindest ein Greiferaufsatz (11) einen Saugbalg (SB) aufweist, der mit der Ansaugöffnung (16) des Greiferaufsatzes (11) verbunden ist und zum Ansaugen des Greifguts (P) vorgesehen ist.

4. Greiferwechselsystem (10) gemäß einem der Ansprüche 2 oder 3, **dadurch gekennzeichnet, dass** der Grundkörper (9) und der Greiferaufsatz (11) zwischen ihren Ansaugöffnungen (12, 16) und Dichtflächen (13, 17) jeweils eine Haltefläche (14, 18) aufweisen, auf die im angekoppelten Zustand der Unterdruck in den Ansaugöffnungen (12, 16) wirkt und eine zur Magnetkraft zusätzliche Ankopplungskraft zum Ankoppeln des Greiferaufsatzes (11) an dem Grundkörper (9) erzeugt.

5. Greiferwechselsystem (10) gemäß einem der Ansprüche 1 oder 4, **dadurch gekennzeichnet, dass** der an den Grundkörper (9) angekoppelte Greiferaufsatz (11) ausschließlich durch die Magnetkraft und insbesondere ausschließlich durch die Magnetkraft und die Ankopplungskraft an dem Grundkörper (9) angekoppelt gehalten wird.

6. Greiferwechselsystem (10) gemäß einem der vorherigen Ansprüche, **dadurch gekennzeichnet, dass** eine Wechselstation (22) zum Ablegen der vom Roboter gerade nicht verwendeten Greiferaufsätzen (11) vorgesehen ist und, dass in der Wechselstation (22) Haltemittel (24) zum Halten der Greiferaufsätze (11) vorgesehen sind und, dass eine Steuerung der Wechselstation (22) zum Lösen der Haltemittel (24) des zum Ankoppeln vorgesehenen Greiferaufsatzes (11) ausgebildet ist, wenn sich das Greifsystem (7) mit dem Grundkörper (9) bereits im Einflussbereich der magnetischen Anziehung des Magneten (20, 21) des Greiferaufsatzes (11) befindet.

7. Greiferwechselsystem (10) gemäß Anspruch 6, **dadurch gekennzeichnet, dass** die Steuerung der Wechselstation (22) zum Ablegen eines Greiferaufsatzes (11) in einer Greiferaufnahme (23) der Wechselstation (22) zum Aktivieren der Haltemittel (24) der Greiferaufnahme (23) ausgebildet ist, wenn das Greifsystem (7) mit dem Grundkörper (9) den zum Ablegen vorgesehenen Greiferaufsatz (11) in die Greiferaufnahme (23) positioniert hat.

8. Greiferwechselsystem (10) gemäß Anspruch 6 oder 7, **dadurch gekennzeichnet, dass** die Haltemittel (23) durch einen Pneumatikzylinder gebildet sind, der zum Betätigen eines Verriegelungsstifts zum Verriegeln des Greiferaufsatzes (11) in der Wechselstation (22) ausgebildet ist.

9. Greiferwechselsystem (10) gemäß einem der vorherigen Ansprüche, **dadurch gekennzeichnet, dass** der Grundkörper (9) und die Greiferaufsätze (11) im angekoppelten Zustand eine formschlüssige Verbindung und insbesondere durch Abschrägungen eine den Greiferaufsatz (11) zentrierende formschlüssige Verbindung eingehen.

10. Greiferwechselsystem (10) gemäß einem der vorherigen Ansprüche, **dadurch gekennzeichnet, dass** das Greiferwechselsystem insbesondere im Grundkörper (9) zumindest einen Sensor aufweist, um den angekoppelten Greiferaufsatz (11) zu identifizieren und/oder zu detektieren, ob der angekoppelte Greiferaufsatz (11) richtig positioniert ist.

11. Greiferaufsatz (11) für ein Greiferwechselsystem (10), **dadurch gekennzeichnet, dass** der Greiferaufsatz (11) die Merkmale gemäß einem der vorstehenden Ansprüche aufweist.

12. Roboter mit einem Greiferwechselsystem, **dadurch gekennzeichnet, dass** der Roboter ein Greiferwechselsystem (10) mit den Merkmalen gemäß einem der vorstehenden Ansprüche aufweist.
